# EUROPÄISCHE PATENTANMELDUNG

(11) **EP 4 834 776 A1**
(43) Veröffentlichungstag der Anmeldung: **04.11.2026**
(21) Anmeldenummer: 26173840.5
(22) Anmeldetag: 21.04.2026
(51) Int. Cl.: B65B 7/28, B65B 3/00, B65B 57/04

(54) **VORRICHTUNG ZUR BEREITSTELLUNG VON STOPFEN ZUM VERSCHLIESSEN VON BEHÄLTNISSEN**

(30) Priorität: 30.04.2025 DE 102025116774
(71) Anmelder: Syntegon Technology GmbH, 70372 Stuttgart (DE)
(72) Erfinder: Bäuerle, Johannes, 74423 Obersontheim (DE); Schwarz, Sebastian, 97084 Würzburg (DE); Harenberg, Melanie, 74523 Schwäbisch Hall (DE); Harenberg, Selin, 01445 Radebeul (DE); Ziaja, Pawel, 91555 Feuchtwangen (DE)
(74) Vertreter: Kreuels, Justus

(57) **Zusammenfassung**

Vorrichtung (1) zur Bereitstellung von Stopfen (5) zum Verschließen von Behältnissen (2) aufweisend ein Führungsbauteil (3) und/oder eine Sortierung (28,29) mit mindestens einer Transportbahn (4), über die Stopfen transportiert werden können, und weiter aufweisend ein Fehlerbehebungseinrichtung (9) mit mindestens einer Sensoreinheit (10) zum Erkennen einer Störung in der mindestens einen Transportbahn (4), mit mindestens einem Schieberelement (11), und mit einem Steuergerät (12), wobei das Steuergerät (12) dazu eingerichtet ist, bei einer mit der Sensoreinheit (10) erkannten Störung beim Transport der Stopfen (5) in einer der Transportbahnen (4) das Schieberelement (11) so zu betätigen, dass mit dem Schieberelement (11) die jeweilige Transportbahn (4) durchfahren wird, um mindestens einen Stopfen aus der Transportbahn (4) zu schieben und so die Störung zu beseitigen.

## Beschreibung

Die Erfindung betrifft eine Vorrichtung zur Bereitstellung von Stopfen zum Verschließen von Behältnissen und weiter ein Verfahren zur Beseitigung von Störungen beim Transport von Stopfen - insbesondere in einer beschriebenen Vorrichtung. Die Vorrichtung zur Bereitstellung von Stopfen zum Verschließen von Behältnissen ist mit einer Fehlerbehebungseinrichtung ausgestattet, mit welcher Fehler bzw. Störungen beim Transport von Stopfen in der Vorrichtung behoben werden können.

Die Behältnisse sind insbesondere pharmazeutische Behältnisse wie Spritzen, Vials, Karpulen oder Ampullen, in denen flüssige pharmazeutische Produkte (flüssige Pharmazeutika) bereitgestellt werden. Solche Behältnisse werden regelmäßig mit Stopfen verschlossen. Solche Stopfen sind üblicherweise silikonbeschichtet und ggf. Gamma-sterilisiert.

Die Vorrichtung wird insbesondere in einer Anlage zum Abfüllen von Flüssigkeiten, insbesondere in einer Anlage zum Abfüllen von flüssigen Pharmazeutika in einem Reinraum/Isolator eingesetzt, um einer Verschlussstation die Stopfen zum Verschließen der Behältnisse zuzuführen.

Grundsätzlich ist es gewünscht, Fehler und Störungen in solchen Anlagen möglichst ohne manuelle Bedienereingriffe zu beheben, um die Bedingungen im Reinraum/Isolator durch Bedienereingriffe nicht zu beeinträchtigen. Aus diesem Grund wurde bereits erwogen innerhalb eines Reinraumes einen Roboter einzusetzen, mit welchem Maßnahmen zur Behebung von Störungen durchgeführt werden können.

Es hat sich herausgestellt, dass ein nicht spezialisierter Roboter zur Behebung aller möglicherweise in einer solchen Anlage auftreten Störungen gegebenenfalls aufwendig zu programmieren ist, und daher insbesondere für Störungen, die in einer solchen Anlage regelmäßiger auftreten, gegebenenfalls spezialisierte Lösungen zielführender sind.

Vor diesem Hintergrund ist es Aufgabe der hier vorliegenden Erfindung, die mit Bezug auf den Stand der Technik geschilderten Probleme wenigstens teilweise zu lösen. Diese Aufgabe wird gelöst mit der Erfindung gemäß den Merkmalen der unabhängigen Patentansprüche. Weitere vorteilhafte Ausgestaltungen sind in den abhängig formulierten Patentansprüchen sowie in der Beschreibung und insbesondere auch in der Figurenbeschreibung angegeben. Es ist darauf hinzuweisen, dass der Fachmann die einzelnen Merkmale in technologisch sinnvoller Weise miteinander kombiniert und damit zu weiteren Ausgestaltungen der Erfindung gelangt.

Hier beschrieben werden soll eine Vorrichtung zur Bereitstellung von Stopfen zum Verschließen von Behältnissen aufweisend ein Führungsbauteil und/oder eine Sortierung mit mindestens einer Transportbahn, über die Stopfen transportiert werden können, und weiter aufweisend ein Fehlerbehebungseinrichtung mit mindestens einer Sensoreinheit zum Erkennen einer Störung beim Transport der Stopfen in den Transportbahnen, mit mindestens einem Schieberelement, und mit einem Steuergerät, wobei das Steuergerät dazu eingerichtet ist, bei einer mit der Sensoreinheit erkannten Störung in einer der Transportbahnen das Schieberelement so zu betätigen, dass mit dem Schieberelement die jeweilige Transportbahn durchfahren wird, um mindestens einen Stopfen aus der Transportbahn zu schieben und so die Störung zu beseitigen.

Der Erfindung liegt die Erkenntnis zu Grunde, dass Störungen insbesondere bei der Bereitstellung von Stopfen zum Verschließen der Behältnisse in einer dafür vorgesehenen Vorrichtung auftreten. Aus diesem Grund wird hier eine spezielle Vorrichtung zur Bereitstellung der Stopfen vorgeschlagen, die eine Fehlerbehebungseinrichtung aufweist, mit welcher Fehler bei der Bereitstellung der Stopfen vermieden werden können.

Anlagen zum Befüllen von Behältnissen arbeiten häufig derart taktweise, dass immer eine Gruppe von Behältnissen (beispielsweise 10 Behältnisse) in einer Abfüllstation gemeinsam befüllt werden und anschließend in einer Verschlussstation gemeinsam verschlossen werden. Zum Verschließen werden die Stopfen in Öffnungen der Behältnisse hineingedrückt.

Die Stopfen sind üblicherweise rotationssymmetrisch ausgeführt. In Ausführungsvariantensind die Stopfen sich konisch verjüngend ausgeführt. Dies ist aber nicht erforderlich. Es können mit der Vorrichtung auch rotationssymmetrische zylinderförmige Stopfen bereitgestellt werden. Die zu verschließende Behältnisse sind üblicherweise aus Glas. Die Stopfen sind darüber hinaus bevorzugt silikonbeschichtet und/oder Gamma-sterilisiert. Die Stopfen können auch auf andere Arten beschichtet sein. Gegebenenfalls sind die Stopfen auch dampfsterilisiert. Damit sind die Stopfen regelmäßig leicht klebrig und ein Transport und eine Vereinzelung der Stopfen ist somit herausfordernd. Insbesondere neigen die Stopfen dazu, in den Transportbahnen leicht zu haften, wenn sie silikonbeschichtet oder Gamma-sterilisiert sind. Als eine übliche Störung in Vorrichtungen zur Bereitstellung von Stopfen kann daher ein Stopfenstau entstehen. Solch eine Verstopfung/Stopfenstau tritt gegebenenfalls nur in einer Transportbahn auf. Es kann auch sein, dass ein solcher Stopfenstau in mehreren Transportbahnen parallel auftritt.

Die Stopfen werden üblicherweise als Schüttgut bereitgestellt und müssen in der hier beschriebenen Vorrichtung vereinzelt und ausgerichtet werden, um sie dann in definierten Positionen einer Verschlussstation zuführen zu können. Für die Vereinzelung, Ausrichtung und Zuführung zu den Stationen werden die Stopfen durch Transportbahnen geführt, welche durch Sortierungen/Sortierstufen und/oder Führungsbauteile verlaufen. Zwischen einzelnen Sortierungen/Sortierstufen und/oder Führungsbauteilen können Reservoire angeordnet sein, in denen bspw. vorausgerichtete Stopfen zwischengespeichert werden bevor sie weiteren Sortierungen/Sortierstufen und/oder einem Führungsbauteil zugeführt werden. Die Ausrichtung erfolgt bspw. so, dass ein verjüngtes Ende aller Stopfen nach unten ausgerichtet wird, so dass es in die Öffnungen der Behältnisse eingesetzt werden kann, um die Behältnisse zu verschließen. Die definierten Positionen sind regelmäßig Aufnahmepositionen an einem Bauteil, welches die Stopfen für das Verschließen der Behältnisse weiterführt. Dieses Bauteil kann bspw. eine Gabel sein, die Aufnahmepositionen für eine Anzahl von Stopfen hat. Die an dem Bauteil bzw. der Gabel angeordnete Anzahl und Anordnung von Aufnahmepositionen entspricht bevorzugt einer Anzahl und Anordnung von Behältnissen in einer Gruppe, die gemeinsam zu verschießen sind.

Die hier beschriebene Mehrzahl von Transportbahnen, die mit dem Schieberelement durchfahren werden können, sind bevorzugt in einem Führungsbauteil ausgebildet. Die Transportbahnen können auch in einer Sortierung/Sortierstufe ausgebildet sein. Die Transportbahnen verlaufen bevorzugt von einem Reservoir für die Zwischenspeicherung von Stopfen durch eine Sortierung und/oder ein Führungsbauteil zu einem weiteren Reservoir und/oder zu Aufnahmepositionen, an denen die ausgerichteten Stopfen für die weitere Verarbeitung aufgenommen werden können. Innerhalb der Vorrichtung sind bevorzugt mehrere Transportbahnen parallel angeordnet, um Stopfen Aufnahmepositionen parallel zuführen zu können. Darüber hinaus sind bevorzugt auch mehrere Transportbahnen hintereinander angeordnet die von den Stopfen in der Vorrichtung nacheinander durchlaufen werden. Erste Transportbahnen sind bspw. in Sortierungen angeordnet und dies sind beispielsweise zur Sortierung/Vorsortierung von Stopfen vorgesehen und sie verlaufen beispielsweise von einem Bunker/Reservoir zu einem anderen Reservoir. Zweite Transportbahnen sind bspw. in dem Führungsbauteil angeordnet und sie verlaufen beispielsweise von einem Reservoir zu den Aufnahmepositionen.

Die Vorrichtung weist bevorzugt verschiedene Elemente auf, die an der Vereinzelung und Ausrichtung der Stopfen mitwirken. Hierzu zählen beispielsweise ein Bunker, in dem die Stopfen zwischengelagert werden können und in welchen die Stopfen über ein Zuführrohr als Schüttgut nachgefüllt werden. Hierzu zählen bevorzugt weiter verschiedene Sortierstufen, wie bspw. eine Vorsortierung und eine weitere Sortierung. Die Vorrichtung weist darüber hinaus bevorzugt Überläufe und/oder Rückführungen auf. Solche Überläufe und Rückführungen sind bspw. Auffangbehälter, in welche in einer Sortierstufe (auch Sortierung genannt) überzählige, nicht korrekt ausgerichtete Stopfen überlaufen können. Bevorzugt existieren mehrere Sortierstufen bzw. Sortierungen, die gemeinsam dazu beitragen, dass alle Stopfen ausgerichtet werden. Aufgrund der angesprochenen Herausforderungen bei der Vereinzelung und Ausrichtung von Stopfen sind die Vorrichtung bzw. die Sortierstufen bevorzugt so ausgeführt, dass nicht alle Stopfen vereinzelt und ausgerichtet werden müssen. Die Vorrichtung bzw. die Sortierstufen sind so ausgebildet, dass Stopfen, deren Vereinzelung und Ausrichtung nicht gelingt, rückgeführt werden. Die Vorrichtung kann eine Rückführung aufweisen, über welche rückzuführende Stopfen und insbesondere Stopfen, die übergelaufen sind, dann den Sortierstufen und/oder dem Bunker wieder zugeführt werden.

Über die Sortierstufen werden die Stopfen in der Vorrichtung bevorzugt einem Reservoir und ausgehend von diesem Reservoir dann einem Führungsbauteil zugeführt, welche die Stopfen dann durchlaufen, um zu den Aufnahmepositionen zu gelangen. In Ausführungsvarianten können auch zwischen einzelnen Sortierungen/Sortierstufen Reservoirs vorgesehen sein, in denen Stopfen zwischengespeichert werden können.

Die Förderung der Stopfen in der gesamten Vorrichtung und insbesondere in den Sortierungen/Sortierstufen und in dem Führungsbauteil erfolgt bevorzugt durch Vibrationen und/oder Schwingungen der Komponenten, die in Kontakt mit den Stopfen sind. Durch Vibrationen und/oder Schwingungen werden die Stopfen immer wieder angehoben und/oder beschleunigt und dadurch weiterbewegt. Dieses Förderprinzip wird regelmäßig auch als "Mikrowurfprinzip" bezeichnet und es ermöglicht einen sehr schonenden Transport der Stopfen.

Sowohl in den Sortierungen/Sortierstufen als auch in dem Führungsbauteil existieren Transportbahnen, die in denen beim Transport der Stopfen Störungen auftreten können, welche mit Fehlerbehebungseinrichtung der hier beschriebenen Vorrichtung behoben werden können.

Die Transportbahnen bzw. das Führungsbauteil können regelmäßig lediglich so ausgebildet sein, dass einmal in die Transportbahnen eingeführte Stopfen vorwärts (mit einer Förderrichtung) zu den Aufnahmepositionen transportiert werden müssen. Ein Überlauf bzw. andere Rückführmittel, beispielsweise für falsch ausgerichtete Stopfen, können insbesondere im Bereich des Führungsbauteils unmittelbar vor den Aufnahmepositionen nicht immer vorgesehen werden. Dementsprechend führt eine Störung beim Transport der Stopfen in den Transportbahnen regelmäßig dazu, dass die Stopfenbereitstellung mit der Vorrichtung unterbrochen werden und die Störung beseitigt werden muss. Insbesondere aufgrund der Silikonbeschichtung und/oder der Gamma-Sterilisation und einer guten Haftung der Stopfen in den Transportbahnen können solche Störungen leicht auftreten. Stopfen, die sich in den Transportbahnen und/oder an Übergängen zwischen Sortierungen und Führungsbauteil etc. verhaken oder verkanten können auch zu einem Stopfenstau beitragen. Durch klebrige Eigenschaften der Stopfen werden solche Probleme verstärkt.

Der hier vorliegenden Erfindung liegt die Erkenntnis zu Grunde, dass insbesondere in der beschriebenen Vorrichtung zur Stopfenbereitstellung und innerhalb dieser Vorrichtung insbesondere in den Transportbahnen bzw. in einem Führungsbauteil und/oder in Sortierungen und Sortierstufen Störungen besonders häufig auftreten. Der Erfindung liegt weiter die Erkenntnis zu Grunde, dass eine speziell für die Vorrichtung vorgesehene Fehlerbehebungseinrichtung geeignet ist, Betriebsstörungen effizient zu beheben.

Durch die Transportbahnen werden die Stopfen ausgehend von dem Reservoir in einer Förderrichtung transportiert. Die hier nun vorgeschlagene Fehlerbehebungseinrichtung weist ein Schieberelement auf, mit welchem Transportbahnen zielgerichtet beispielsweise entgegen der Förderrichtung entleert werden können, wenn in einer Transportbahn eine Störung (bspw. ein Stopfenstau) auftritt. Die Transportbahn wird zu diesem Zweck mit dem Schieberelement durchfahren. Bei der Förderung/Bereitstellung von Stopfen mit der Vorrichtung werden Stopfen üblicherweise mit einer Förderrichtung von einem Bunker/Reservoir zu den Aufnahmepositionen/Behältnissen gefördert. Die Fehlerbehebungseinrichtung ist in Ausführungsvarianten so eingerichtet, dass Stopfen entgegen der Förderrichtung zurück geschoben werden - beispielsweise in ein Reservoir. In anderen Ausführungsvarianten ist es auch möglich, dass mit dem Schieberelement Transportbahnen zielgerichtet in Förderrichtung in einen dafür vorgesehenen Behälter entleert werden. Ein solcher Behälter kann bspw. während der Störungsbeseitigung an Stelle von Aufnahmepositionen angeordnet werden, um Stopfen aufzufangen.

Im Vergleich zu einem Robotergreifer, mit welchem Stopfen, die Teil einer Störung sind, gegriffen und entnommen werden, ist das hier beschriebene Schieberelement sehr einfach ausgeführt. Das Schieberelement muss lediglich dazu geeignet sein, eine ungerichtete Schiebekraft auf die Stopfen in der Transportbahn auszuüben, um diese aus der Transportbahn zu beseitigen. Die Führung der Stopfen zurück in das Reservoir (oder in Förderrichtung in ein Reservoir) übernimmt die Transportbahn. Insbesondere ist es für das Schieberelement nicht erforderlich die Stopfen (sicher) zu greifen.

Die Vorrichtung weist darüber hinaus mindestens eine Sensoreinheit auf, mit der aufgetretene Störungen erkannt werden können. Diese Sensoreinheit kann auf sehr verschiedene Arten ausgeführt sein. Die Sensoreinheit kann beispielsweise eine oberhalb des Führungsbauteils angeordnete Kamera sein, mit der Störungen erkannt werden können. Dann ist regelmäßig eine (komplexe) Auswertung der mit der Kamera erfassten Daten erforderlich, um aus den erfassten Kameradaten auf Fehler/Störungen (wie beispielsweise einen Stopfenstau) schließen zu können. Die Sensoreinheit kann aber auch anders ausgeführt sein und beispielsweise Signale erfassen, die direkter und mit einer weniger komplexen Auswertung die Erkennung von Fehlern beim Transport der Stopfen ermöglichen. Weiter unten werden hierzu Möglichkeiten vorgeschlagen.

Die Vorrichtung weist darüber hinaus bevorzugt ein Steuergerät auf, welches dazu eingerichtet ist, basierend auf den mit der mindestens einen Sensoreinheit erfassten Daten das Schieberelement so zu betätigen, dass die Transportbahn zum Beseitigen der Störung durchfahren wird.

Besonders bevorzugt ist, wenn das Schieberelement am Ende eines Roboterarms angeordnet ist und wenn das Steuergerät dazu eingerichtet ist, den Roboterarm zu steuern, um das Schieberelement zu bewegen.

Außerdem bevorzugt ist, wenn der Roboterarm einen Ausleger aufweist, an dessen Ende das Schieberelement angeordnet ist, und weiter bevorzugt ist, wenn die Vorrichtung so ausgeführt ist, dass von dem Roboterarm (bei der Störungsbeseitigung) ausschließlich der Ausleger und das Schiebelement oberhalb des Führungsbauteils und/oder oberhalb der Sortierung angeordnet sind.

Der Ausleger ist bevorzugt durchgehend ausgeführt. Das bedeutet, dass der Ausleger bevorzugt keine Gelenke und/oder Scharniere aufweist. Zudem ermöglicht der Ausleger, dass kein weiteres Element des Roboterarms über dem Führungsbauteil angeordnet werden muss.

Durch eine solche Ausführung wird insbesondere vermieden, dass Partikel (wie Abrieb und/oder Schmiermittelspuren) von Elementen des Roboterarms von oben aus das Führungsbauteil, die Transportbahnen und/oder die Stopfen gelangen bzw. fallen.

Bevorzugt ist der Roboterarm so ausgeführt, dass die gesamte Kinematik zur Bewegung des Schieberelementes seitlich des Führungsbauteils bzw. seitlich von stopfen führenden Teilen (Transportbahnen) der Vorrichtung angeordnet ist und über dem Führungsbauteil lediglich der durchgehende Ausleger angeordnet ist, an dessen Ende sich das Schieberelement befindet.

Besonders bevorzugt ist der Ausleger schmal ausgeführt, so dass eine Luftströmung oberhalb des Führungsbauteils durch den Ausleger möglichst wenig gestört wird und auch Bewegungen des Auslegers zur Beseitigung der Störung möglichst wenig zusätzliche Luftströmungen oberhalb des Führungsbauteils hervorrufen.

Bevorzugt ist die Querschnittsform des Auslegers dafür optimiert möglichst wenig Störungen der Luftströmungen hervorzurufen. Bevorzugt ist der Ausleger über seine Länge hinweg hin zu dem Schieberelement verjüngend ausgeführt und insbesondere an die beim Schieben von Stopfen auftretenden Kräfte angepasst ausgeführt. So kann ein besonders geringer Querschnitt des Auslegers umgesetzt sein.

Weiter bevorzugt ist, wenn in dem Steuergerät mindestens ein Startpunkt im Verlauf jeder der Transportbahnen definiert ist, wobei das Steuergerät dazu eingerichtet ist, bei einer erkannten Störung in einer Transportbahn die jeweilige Transportbahn ausgehend von dem jeweiligen Startpunkt zu durchfahren.

Beim Durchfahren einer Transportbahn ausgehend von einem Startpunkt fährt das Schieberelement bevorzugt ausgehend von dem Startpunkt bis zu einem Ende/Beginn der jeweiligen Transportbahn. Ein solches Ende kann bspw. eine Aufnahmeposition für Stopfen und/oder ein (Zwischen-)Reservoir zwischen Sortierungen und/oder dem Führungsbauteil sein. Startpunkte sind bevorzugt als Parameter in dem Steuergerät hinterlegt. Starpunkte, können am Beginn von Transportbahnen, am Ende von Transportbahnen oder im Verlauf von Transportbahnen zwischen Beginn und Ende vorgesehen sein und dienen als Einstiegspunkte für der Schieberelement zur Beseitigung von Störungen. Wenn eine Störung erkannt wird, wird in dem Steuergerät bevorzugt ein festes Programm zum Betrieb des Schieberelementes bzw. des Roboterarmes gestartet, bei welchem das Schieberelement an der Startposition in die jeweilige Transportbahn eingeführt wird und dann bis zu dem Ende/Anfang der Transportbahn durch die Transportbahn hindurch bewegt wird, um Alles was sich zwischen dem Starpunkt und dem Ende/Anfang befindet (alle Stopfen) aus der Transportbahn herauszuschieben.

Bevorzugt ist das Schieberelement ist so ausgeführt, dass es mit seiner Spitze beim Einfahren die Stopfen beiseiteschiebt. Bevorzugt ist in dem Steuergerät auch eine Routine für Fälle hinterlegt, in denen es nicht gelingt das Schieberelement in die Transportbahn einzuführen. Das Steuergerät ist bevorzugt so eingerichtet bzw. mit einer hinterlegten Programmroutine ausgeführt, die erkennt, wenn mit dem Schieberelement von oben auf einen Stopfen gedrückt wird. Dies kann beispielsweise an einem erhöhten Widerstand und/oder anhand einer erhöhten Stromaufnahme erkannt werden. Gegebenenfalls kann das Steuergerät bzw. die Programmroutine dazu eingerichtet sein dann das Schieberelement an einer Alternativposition in der Nähe der Startposition (beispielsweise in einem Abstand von wenigen Millimetern vor oder hinter der Startposition) erneut in die Transportbahn einzuführen. Eine solche Routine ist bevorzugt dafür eingerichtet wiederholt zu werden, bis das Schieberelement erfolgreich in die Transportbahn eingebracht ist.

Darüber hinaus bevorzugt ist, wenn in dem Steuergerät mindestens zwei Startpunkte im Verlauf jeder der Transportbahnen definiert sind, wobei das Steuergerät dazu eingerichtet ist bei einer erkannten Störung in einer Transportbahn diese Transportbahn mehrfach zu durchfahren, wobei bei einem ersten Durchfahrvorgang die Transportbahn ausgehend von einem ersten Startpunkt durchfahren wird, wobei dann anschließend ausgehend von jedem der weiteren Startpunkte aus ein weiterer Durchfahrvorgang stattfindet, wobei die weiteren Startpunkte derart nacheinander angefahren werden, dass die jeweils durchfahrende Strecke der Transportbahn jedes Mal länger wird.

Auch diese Verfahrensführung läuft bevorzugt gemäß einem in dem Steuergerät fest hinterlegten Programm bzw. Programmroutine ab. Dieser Verfahrensführung liegt der Gedanke zu Grunde, dass es (je nachdem wie viele Stopfen in einer Transportbahn befindlich sind) nicht möglich ist, alle Stopfen mit einen Durchfahrvorgang gemeinsam aus der Transportbahn hinauszuschieben. Vielmehr soll die Anzahl von Stopfen, die in einem Durchfahrvorgang geschoben werden müssen, begrenzt werden. Die Transportbahn soll Bahnabschnitt für Bahnabschnitt leergeräumt werden, wobei jeder leerzuräumende Abschnitt zwischen zwei nacheinander angefahrenen Startpunkten liegt. Die verschiedenen Startpunkte unterteilen die Transportbahn in Bahnabschnitte. Mit jedem einzelnen Durchfahrvorgang müssen nur die Stopfen aus der Transportbahn hinausgeschoben werden, die in einem einzelnen Bahnabschnitt befindlich sind. Durch diese Verfahrensführung werden bevorzugt nacheinander alle Bahnabschnitte einer Transportbahn von Stopfen befreit bzw. geleert. Je nachdem, ob Transportbahnen in einer Förderrichtung oder entgegen deiner Förderrichtung leergeräumt werden, ist die Reihenfolge der anzufahrenden Startpunkte festgelegt. Wenn eine Entleerung der Transportbahnen entgegen der Förderrichtung (bspw. zurück in ein Reservoir) erfolgen soll, wird bevorzugt zunächst ein am nächsten am Anfang der Transportbahn/am Reservoir angeordneter Startpunkt angefahren und anschließend werden die Startpunkte in der Reihenfolge ihres Abstandes von dem Anfang/dem Reservoir angefahren. Wenn eine Entleerung der Transportbahnen in Förderrichtung (bspw. hin zu Aufnahmepositionen für Stopfen) erfolgt, werden Startpunkte bevorzugt in umgekehrter Reihenfolge angefahren.

Für den Fall, dass mit der Fehlerbehebungseinrichtung eine oder mehrere Transportbahnen geleert wurden, können Anfahrprozeduren vorgesehen sein, die mit der Vorrichtung durchlaufen werden, um die Transportbahnen wieder zu befüllen, so dass vor den Aufnahmepositionen wieder Stopfen stehen. Bei einer solchen Anfahrprozedur kann beispielsweise ein Auffangbehälter für Stopfen unterhalb von Aufnahmepositionen am Ende eines Führungsbauteils angeordnet werden. Die Förderung von Stopfen mit der Vorrichtung kann dann wieder gestartet werden. Wenn mit einer Sensoreinheit wieder eine ordnungsgemäße Bereitstellung von Stopfen erkannt wird, kann die Bereitstellung von Stopfen zum Verschließen von Behältnissen wieder gestartet werden.

Darüber hinaus bevorzugt ist, wenn das Steuergerät dazu eingerichtet ist, einen Widerstand zu erkennen, welcher beim Durchfahren der mindestens einen Transportbahn mit dem Schieberelement auftritt.

Weiter bevorzugt ist, wenn das Steuergerät dazu eingerichtet ist eine Vorwärtsbewegung des Schieberelementes beim Durchfahren der mindestens einen Transportbahn mit dem Schieberelement zu überwachen und festzustellen, ob die Vorwärtsbewegung einer erwarteten Bewegung entspricht.

Ein Widerstand beim Durchfahren einer Transportbahn mit dem Schieberelement und/oder das Ausbleiben einer erwarteten Bewegung des Schieberelements kann bspw. mit einem Sensor an dem Roboterarm erkannt werden. Ein solcher Widerstand kann in Ausführungsvarianten auch durch Sensorik in einem Roboterantriebs des Roboterarms erkannt werden. Es kann beispielsweise auch eine Auswertung von elektrischen Antriebsströmen des Roboterantriebs erfolgen.

Messwerte von dem Roboterantrieb und/oder einem Sensor an dem Roboterarm werden bevorzugt an das Steuergerät übermittelt und können gegebenenfalls verwendet werden, um die Ansteuerung des Roboterarms bzw. des Schieberelementes beim Durchfahren der mindestens einen Transportbahn und bei der Durchführung eines der Durchfahrvorgänge anzupassen.

Darüber hinaus bevorzugt ist, wenn das Steuergerät dazu eingerichtet ist, dann wenn eine Vorwärtsbewegung und/oder ein Widerstand beim Durchfahren der mindestens einen Transportbahn mit dem Schieberelement einen Grenzwert überschreitet und/oder unterschreitet, einen Durchfahrvorgang abzubrechen und an einen anderen Startpunkt im Verlauf der jeweiligen Transportbahn einen weiteren Durchfahrvorgang zu starten.

In bevorzugten Ausführungsvarianten ist es auch möglich, dass Startpunkte für Durchfahrvorgänge entlang der Transportbahn beliebig gewählt werden und die Transportbahn bei einem erhöhten Widerstand somit in so viele einzelne Bahnabschnitte unterteilt wird, die einzeln von Stopfen befreit werden, dass Widerstände beim Durchfahren der mindestens einen Transportbahn immer unterhalb definierter Grenzwerte liegen.

Besonders bevorzugt können Startpunkte für Durchfahrvorgänge entlang der Transportbahn auch beliebig gewählt werden, um die Länge der jeweiligen Bahnabschnitte anzupassen, die von Stopfen befreit werden. In bevorzugten Ausführungsvarianten kann jede Position entlang der Transportbahn als Startpunkt eines Durchfahrvorganges angefahren werden.

Auch bevorzugt ist, wenn das Steuergerät weiter dazu eingerichtet ist, dann wenn der weitere Durchfahrvorgang erfolgreich abgeschlossen ist, erneut den vorangegangenen Durchfahrvorgang zu starten.

Es ist beispielsweise möglich, dass ein Startpunkt für einen ersten Durchfahrvorgang so festgelegt ist, dass die komplette Transportbahn mit dem Schieberelement durchfahren wird. Wenn dann bei dem Durchfahrvorgang ein Widerstand gegen das Schieberelement festgestellt wird, welcher einen Grenzwert überschreitet, kann dann der Durchfahrvorgang abgebrochen werden. An einem zusätzlichen Startpunkt kann dann ein weiterer Durchfahrvorgang gestartet werden, mit dem ein Bahnabschnitt zwischen dem Punkt des Abbruchs des ersten Durchfahrvorgangs und dem Reservoir zumindest teilweise freigeräumt wird. Anschließend kann das Schieberelement wieder zu dem Startpunkt des ersten Durchfahrvorgangs bewegt werden und der vorangegangene Durchfahrvorgang kann erneut gestartet werden. Eine derartige Betriebsweise der Vorrichtung und der Fehlerbehebungseinrichtung kann noch weiter verfeinert werden, in dem ggf. auch der beim weiteren Durchfahrvorgang durchfahrene Bahnabschnitt noch weiter unterteilt wird und mit zusätzlichen Unter-Durchfahrvorgängen frei geräumt wird, um zu große Widerstände gegen das Schieberelement beim Freiräumen der Transportbahn zu verhindern.

Weiter bevorzugt ist, wenn die mindestens eine Sensoreinheit mindestens einen Bahnsensor umfasst, mit welchem Transport von Stopfen durch eine Transportbahn erkannt werden kann.

Weiter bevorzugt ist, wenn die mindestens eine Sensoreinheit insbesondere dazu eingerichtet ist zu erkennen, wenn kein (vorgesehener) Transport von Stopfen durch eine Transportbahn erfolgt.

Weiter oben wurde schon beschrieben, dass die mindestens eine Sensoreinheit ein Kamerasystem sein kann, mit welchem Störungen beim Transport der Stopfen (bspw. Stopfenstaus) erkannt werden können. In weiteren Ausführungsvarianten ist es möglich, dass die Sensoreinheit Bahnsensoren umfasst, mit denen einzelne oder mehrere Transportbahnen überwacht werden können. Bahnsensoren können bspw. dazu eingerichtet sein zu überwachen, ob in einer Transportbahn an einer bestimmten Stelle regelmäßig (im vorgesehenen Abstand) neue Stopfen aufschlagen oder nicht. Wenn bspw. mit einem Bahnsensor erkannt wird, dass an einer bestimmten Stelle keine Stopfen mehr auftreten, kann eine Störung erkannt werden. Bahnsensoren können beispielsweise einfache Lichtschranken sein, mit denen bestimmte Positionen entlang der Transportbahn überwacht werden, um den Transport der Stopfen zu erkennen.

Darüber hinaus bevorzugt weist die beschriebene Vorrichtung eine Reinluftbereitstellung auf, welche dazu eingerichtet ist von einer Position oberhalb des Führungsbauteils ausgehend eine gleichmäßige von oben nach unten ausgerichtete laminare Reinluftströmung zu erzeugen, mit welcher das Führungsbauteil beaufschlagt wird.

Die Reinluftbereitstellung kann insbesondere auch Teil einer Anlage zum Befüllen von Behältnissen sein, in welcher die beschriebene Vorrichtung angeordnet ist. Eine solche Anlage kann einen Reinraum/Isolator aufweisen, in welchem die Befüllung der Behältnisse stattfindet und in welchem auch die Vorrichtung angeordnet ist.

Mit einer derartigen Reinluftströmung werden Verunreinigungen, die beim Transport der Stopfen und/oder beim Betrieb der Vorrichtung auftreten, zuverlässig nach unten weg transportiert. Verunreinigungen können beispielsweise durch Reibung/Abrieb an beweglichen Teilen entstehen. Durch eine derartige Reinluftströmung können daher höchste Anforderungen an die Reinheit in dem Reinraum erreicht werden.

Die Fehlerbehebungseinrichtung und insbesondere der Roboterarm, welcher zur Behebung von Störungen oberhalb des Führungsbauteils und/oder oberhalb der Sortierungen zum Einsatz kommt, beeinträchtigt die von oben auf das Führungsbauteil/die Sortierungen treffende Reinluftströmung. Durch die Gestaltung des Roboterarms mit dem Ausleger kann diese Beeinträchtigung minimiert werden. Besonders bevorzugt ist die Fehlerbehebungseinrichtung so eingerichtet, dass dann, wenn keine Fehlerbehebung erfolgt, der Roboterarm bzw. der Ausleger nicht oberhalb des Führungsbauteils und/oder der Sortierungen angeordnet ist. Bevorzugt existiert eine vorgesehene Abstellposition für den Roboterarm/den Ausleger seitlich des Führungsbauteils und seitlich der Sortierungen, in welcher sich der Roboterarm/der Ausleger immer dann befindet, wenn keine Fehlerbehebung durchgeführt wird. Wenn der Roboterarm bzw. der Ausleger sich in dieser Abstellposition befindet, wir die Reinluftströmung durch den Roboterarm/Ausleger bevorzugt nicht beeinträchtigt.

Hier auch beschrieben werden soll eine Anlage zum Befüllen von Behältnissen mit einer Flüssigkeit, insbesondere mit einer pharmazeutischen Flüssigkeit, aufweisend eine Verschlussstation, an welcher befüllte Behältnisse mit Stopfen verschlossen werden und weiter aufweisend eine beschriebene Vorrichtung zur Bereitstellung von Stopfen für die Verschlussstation.

Die vorstehend im Zusammenhang mit der Vorrichtung beschriebenen besonderen Vorteile und Ausgestaltungsmerkmale sind auf die Anlage übertragbar.

Hier außerdem beschrieben werden soll ein Verfahren zum Beseitigen von Störungen beim Transport von Stopfen in mindestens einer Transportbahn in einer Vorrichtung zur Bereitstellung der Stopfen, wobei die Stopfen über die Transportbahn in einer Förderrichtung transportiert werden können, aufweisend die folgenden Schritte:
a) Erkennen einer Störung beim Transport der Stopfen in der Transportbahn;
b) Einführen eines Schieberelementes in die mindestens eine Transportbahn; und
c) Durchfahren der mindestens einen Transportbahn entgegen der Förderrichtung mit dem Schieberelement, um mindestens einen Stopfen aus der Transportbahn zurück in ein Reservoir zu fördern, in welchem die Stopfen bereitgestellt werden.

Die vorstehend im Zusammenhang mit der Vorrichtung beschriebenen besonderen Vorteile und Ausgestaltungsmerkmale sind ebenfalls auf das Verfahren übertragbar. Insbesondere die vorstehend beschriebenen Programme und Programmroutinen, die zum Betrieb der Vorrichtung und/oder zum Betrieb der Fehlerbehebungseinrichtung in dem Steuergerät hinterlegt sein können, können Teil des beschriebenen Verfahrens sein. Das Verfahren kann insbesondere mit einer beschriebenen Vorrichtung und besonders bevorzugt mit einer beschriebenen Vorrichtung in einem Reinraum ausgeführt werden.

Die Erfindung sowie das technische Umfeld der Erfindung werden nachfolgend anhand der Figuren näher erläutert. Die Figuren zeigen bevorzugte Ausführungsbeispiele, auf welche die Erfindung nicht beschränkt ist. Es ist insbesondere darauf hinzuweisen, dass die Figuren und insbesondere die in den Figuren dargestellten Größenverhältnisse nur schematisch sind. Es zeigen:
- Fig. 1:: ein Bespiel für ein Behältnis mit einem Stopfen;
- Fig. 2:: eine beschriebene Vorrichtung;
- Fig. 3:: ein Detail einer beschriebenen Vorrichtung;
- Fig. 4:: ein Detail eines Roboterarms einer beschriebenen Vorrichtung;
- Fig. 5:: eine Anlage aufweisend eine beschriebene Vorrichtung.

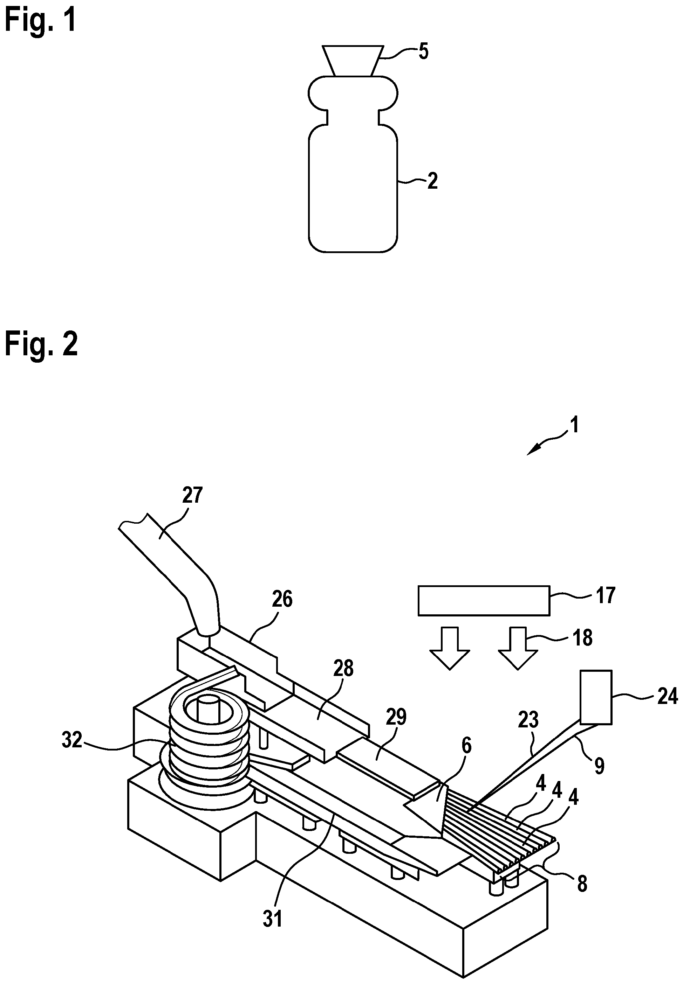

Die Fig. 1 zeigt beispielhaft ein Behältnis 2, welches mit einem Stopfen 5 verschlossen wird. Ein solches Behältnis 2 kann beispielsweise eine Spritze, eine Ampulle, ein Vial oder eine Karpule sein. Ein solches Behältnis 2 ist üblicherweise aus Glas. Der Stopfen 5 ist üblicherweise aus einem Kunststoffmaterial. Die Stopfen 5 sind üblicherweise rotationssymmetrisch und konisch ausgeführt, so dass sie mit ihrer konischen Form in ein runde Öffnung des Behältnisses 2 gedrückt werden können und über Haftreibung in der runden Öffnung des Behältnisses 2 gehalten werden. Der Stopfen 5 ist üblicherweise mit einer Silikonbeschichtung versehen, die ein sicheres Halten und eine Abdichtung des Stopfens 5 in dem Behältnis gewährleistet. Die Silikonbeschichtung der Stopfen 5 bzw. die Stopfen 5 sind regelmäßig auch Gamma-sterilisiert. Es können auch andere Beschichtungen auf den Stopfen 5 zum Einsatz kommen. Die Stopfen 5 können gegebenenfalls auch dampfsterilisiert sein.

Die Fig. 2 zeigt eine beschriebene Vorrichtung 1, die dazu eingerichtet ist, Stopfen 5 zum Verschließen von Behältnissen 2 Aufnahmepositionen 8 zuzuführen, von denen ausgehend die Stopfen 5 verwendet werden können, um Behältnisse 2 zu verschließen. Es sind beispielsweise eine Anzahl von mehreren Aufnahmepositionen 8 nebeneinander an einer (hier nicht dargestellten) Gabel 30 angeordnet, mit welcher die Stopfen dann auf (hier ebenfalls nicht dargestellte) Behältnisse 2 aufgesetzt werden können.

Für ein zuverlässiges Verschließen von Behältnissen 2 mit Stopfen 5 ist es entscheidend, dass alle Aufnahmepositionen 8 einer Gabel 30 mit Stopfen 5 vollständig besetzt sind. Das Handling von Stopfen 5 mit der hier beschriebenen Vorrichtung 1 ist gelegentlich beeinträchtigt. Dies liegt insbesondere an der Silikonbeschichtung und der Gamma-Sterilisation der Stopfen 5. Die Stopfen 5 haften insbesondere aufgrund dieser Behandlung regelmäßig an Bauteilen der Vorrichtung 1 an. Es können beispielsweise Verkantungen von Stopfen 5 in Transportbahnen 4 und/oder an Übergängen zwischen Sortierungen 28, 29 und/oder dem Führungsbauteil 3 auftreten, die gegebenenfalls durch die Behandlung noch verstärkt bzw. gehalten werden. Dadurch wird ein Transport der Stopfen 5 erschwert. Eine Überwachung, ob Stopfen 5 mit der Vorrichtung wie gewünscht transportiert werden, ist vorgesehen und vorstehend beschrieben. Ebenfalls vorgesehen ist eine Fehlerbehebungseinrichtung 9, mit der Fehler beim Transport der Stopfen 5 behoben werden können, wenn mit einer Überwachung solche Fehler erkannt wurden.

Der in Fig. 2 dargestellte Aufbau einer Vorrichtung 1 zur Bereitstellung von Stopfen 5 ist nur beispielhaft. Die Vorrichtung 1 kann auch anders aufgebaut sein. Die Vorrichtung 1 umfasst insbesondere ein Führungsbauteil 3 mit einer Vielzahl von Transportbahnen 4. Durch jede der Transportbahnen 4 werden Stopfen 5 zu den Aufnahmepositionen 8 transportiert. Der Abstand der Aufnahmepositionen 8 wird durch den Verlauf der Transportbahnen 4 eingestellt. Fehler bei der Bereitstellung von Stopfen 5 treten insbesondere beim Transport der Stopfen 5 durch diese Transportbahnen 4 auf. Solch ein Fehler kann beispielsweise ein Stopfenstau sein, bei welchem sich mehrere Stopfen 5 in einer Transportbahn 4 verkeilt haben, so dass kein weiterer Transport von Stopfen durch die Transportbahn 4 auftritt. Aus diesem Grund ist die Fehlerbehebungseinrichtung 9 dazu eingerichtet, solche Fehler beim Transport der Stopfen 5 in den Transportbahnen 4 zu beheben. Die Fehlerbehebungseinrichtung 9 weist insbesondere einen Roboterarm 23 auf, der von einem hier schematisch dargestellten Roboterantrieb 24 angetrieben wird und im Folgenden anhand der weiteren Figuren näher erläutert wird.

Die Zufuhr von Stopfen 5 zu dem Führungsbauteil 3 mit den Transportbahnen 4 erfolgt aus einem Reservoir 6, in welchem die Stopfen 5 ausgerichtet bereitgestellt werden. Die Befüllung des Reservoirs 6 mit Stopfen 5 erfolgt aus einem Bunker 27. In den Bunker 27 wiederum gelangen die Stopfen 5 ungeordnet und nicht ausgerichtet als Schüttgut über ein Zuführrohr 26. Aus dem Bunker 27 werden die Stopfen 5 über mehrere Sortierstufen (hier Vorsortierung 28 und Sortierung 29) dem Reservoir 6 zugeführt. Auch in den Sortierungen 28,29 sind jeweils Transportbahnen 4 vorgesehen durch welche Stopfen transportiert werden. Bevorzugt erfolgt in der Vorsortierung 28 eine Vororientierung der Stopfen 5 und in der Sortierung 29 werden dann falsch orientierte Stopfen 5 aussortiert.. Mit "Vororientierung" bzw. "Orientierung" ist hier insbesondere gemeint, dass eine derartige Ausrichtung erfolgt, dass die Achsen aller Stopfen 5 in dem Reservoir 6 gleich ausgerichtet sind und (für den Fall, dass die Stopfen 5 konisch geformt sind) auch die konische Form aller Stopfen 5 in dem Reservoir 6 gleich ausgerichtet ist. Auch in der Vorsortierung 28 und der Sortierung 29 gelingt es regelmä8g nicht immer, dass alle Stopfen 5 entsprechend richtig ausgerichtet werden. Deswegen ist üblicherweise eine Art Rückführung 31 vorgesehen, in welcher nicht korrekt ausgerichtete Stopfen 5 aus den verschiedenen Sortierstufen 28,29 aussortiert werden können. Aus der Rückführung31 werden die Stopfen 5 dann bspw. über eine hier als Wendel ausgeführte Rückförderung 32 wieder zurück vor die Sortierstufen 28, 29 gegeben, um erneut zu versuchen die Stopfen 5 auszurichten.

Die komplette Vorrichtung 1 und insbesondere die Komponenten der Vorrichtung 1, die Stopfen 5 transportieren, werden bevorzugt unter Reinraumbedingungen betrieben. Üblicherweise ist oberhalb der Vorrichtung 1 eine Reinluftbereitstellung 17 angeordnet von welcher ausgehend während des Betriebs der Vorrichtung 1 eine gleichmäßige, möglichst laminare Reinluftströmung 18 nach unten strömt, so dass eine permanente Umströmung der gesamten Vorrichtung 1 mit Reinluft erfolgt. Die Vorrichtung 1 ist bevorzugt so ausgeführt, dass möglichst wenig Überdeckungen existieren, durch welche diese Reinluftströmung 18 gestört wird. Auch die Fehlerbehebungseinrichtung 9 ist so gestaltet, dass möglichst wenig Beeinträchtigungen der Reinluftströmung 18 oberhalb des Führungsbauteils 3 und der Transportbahnen 4 auftreten.

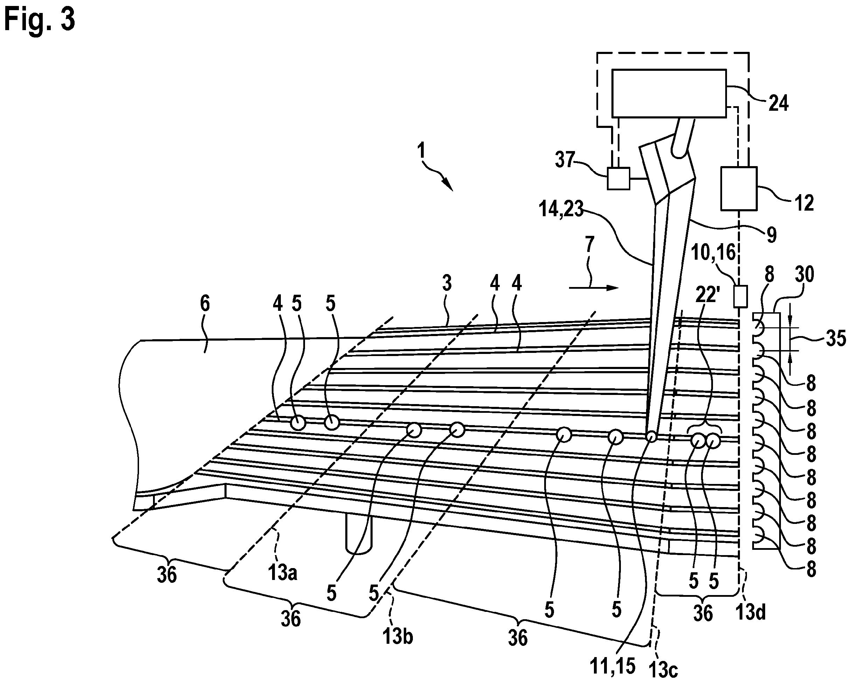

Das Führungsbauteil 3 mit den Transportbahnen 4 der Vorrichtung 1 ist in Fig. 3 mit weiteren Details dargestellt. Gemäß der Fig. 3 wird die Vorrichtung und deren Funktionsweise anhand des Führungsbauteils 3 und anhand der darin angeordneten Transportbahnen 4 erläutert, die von einem Reservoir 6 zu Aufnahmepositionen 8 verlaufen. Die folgenden Erläuterung sind analog auf Sortierungen 28,29 und darin angeordnete Transportbahnen 4 übertragbar, die bspw. von einem erstem Reservoir und/oder einem Bunker zu einem zweiten Reservoir verlaufen können.

In Fig. 3 ist zu erkennen, wie die Transportbahnen 4 von dem Reservoir 6 zu den Aufnahmepositionen 8 verlaufen. Ein Transport der Stopfen 5 erfolgt durch die Transportbahnen 4 in einer Förderrichtung 7. In Fig. 3 sind beispielhaft transportierte Stopfen 5 in einer der Transportbahnen 4 des Führungsbauteils 3 gezeigt. Tatsächlich (im Einsatz der Vorrichtung 1) werden durch alle Transportbahnen 4 Stopfen 5 bewegt. Die Transportbahnen 4 sind insbesondere aufgefächert, um einen gewünschten Abstand 35 der Stopfen 5 einzustellen, der dem Abstand von Aufnahmepositionen 8 für die Stopfen 5 entspricht.

Die Aufnahmepositionen 8 sind insbesondere an einer Gabel 30 angeordnet, welche mit dem Führungsbauteil 3 und der Vorrichtung 1 mit Stopfen 5 befüllt wird. Die vollständig mit Stopfen 5 befüllte Gabel 30 (bei der alle Aufnahmepositionen 8 mit Stopfen 5 besetzt sind) wird dann bevorzugt benutzt, um die Stopfen 5 in einer (hier nicht dargestellten) Verschlussstation auf die Behältnisse 2 aufzusetzen und die Behältnisse 2 mit den Stopfen 5 zu verschließen.

An der Sortierung 28, 29 und/oder an dem Führungsbauteil 3 ist mindestens eine Sensoreinheit 10 angeordnet, mit welcher erkannt werden kann, ob ein Fehler beim Transport der Stopfen 5 durch die Transportbahnen 4 auftritt. Ein solcher Fehler kann beispielsweise ein (hier beispielhaft gezeigter) Stopfenstau 22 sein, bei welchem sich mehrere Stopfen 5 in einer Transportbahn 4 miteinander verkeilen, so dass kein weiterer Transport von Stopfen 5 durch diese Transportbahn 4 mehr erfolgen kann. Die Sensoreinheit 10, kann bspw. einen oder mehrere Bahnsensoren 16 umfassen, mit denen eine oder mehrere der Transportbahnen 4 überwacht werden können und mit denen festgestellt werden kann, ob der (vorgesehene) Transport von Stopfen 5 durch die Transportbahn 4 erfolgt.

Wenn mit der Sensoreinheit 10 ein Fehler erkannt wurde, dann wird die Fehlerbehebungseinrichtung 9 eingesetzt, um den Fehler zu beheben. Die Daten von der Sensoreinheit 10 werden dazu in einem Steuergerät 12 verarbeitet und in Betriebsbefehle für einen Roboterarmantrieb 24 umgesetzt, mit welchem der Roboterarm 23 zur Behebung des Fehlers betätigt wird. Der Roboterarm 23 hat einen Ausleger 14, an dessen Ende 15 ein Schieberelement 11 angeordnet ist, welches zur Behebung des Fehlers beim Transport der Stopfen 5 eingesetzt wird. Der Ausleger 14 ist bevorzugt sehr schmal ausgeführt, so dass die anhand von Fig. 2 vorstehend erläuterte laminare Reinluftströmung, die von oben auf das Führungsbauteil 3 trifft durch den Roboterarm 23 bzw. den Ausleger 14 möglichst wenig beeinträchtigt wird. Der Roboterarm 23 ist bevorzugt so ausgeführt, dass während der Fehlerbehebung (in jeder Phase der Fehlerbehebung) von dem Roboterarm 23 ausschließlich der Ausleger 14 mit dem Schieberelement 11 und keine weiteren Komponenten oberhalb des Führungsbauteils 3 angeordnet sind. Eine Beeinträchtigung der laminaren Reinluftströmung findet lediglich durch das den Ausleger 14 statt, der bewusst sehr schmal und gegebenenfalls auch für eine geringe Beeinflussung der Reinluftströmung strömungsoptimiert geformt ist.

Bei der Fehlerbehebung durchfährt der Roboterarm 23 mit dem Schieberelement 11 die Transportbahn 4, in welcher ein Fehler erkannt wurde, entgegen der Förderrichtung 7, um in der Transportbahn 4 befindliche Stopfen 5 komplett zurück in das Reservoir 6 zu fördern und die Transportbahn 4 so zu leeren. Bevorzugt durchfährt der Roboterarm 23 die Transportbahn 4 mit dem Schieberelement 11 dabei mehrfach und abschnittsweise. Bevorzugt finden nacheinander mehrere Durchfahrvorgänge statt, bei denen das Schieberelement 11 bzw. der Roboterarm 23 die Transportbahn 4 durchfährt, die jeweils bei unterschiedlichen Startpunkten 13a, 13b, 13c, 13d starten. Bevorzugt startet ein erster Durchfahrvorgang an einem ersten Startpunkt 13a, der am nächsten am Reservoir ist. Dadurch wird zunächst ein zwischen dem Reservoir 6 und dem ersten Startpunkt 13a befindlicher Bahnabschnitt 36 der Transportbahn zurück in das Reservoir geleert. Anschließend startet bevorzugt ein zweiter Durchfahrvorgang an einem zweiten Startpunkt 13b. Bei jedem Durchfahrvorgang durchfährt das Schieberelement 11 bevorzugt die jeweilige Transportbahn von dem jeweiligen Startpunkt 13a, 13b, 13c 13d bis zu dem Reservoir 6. Bei dem zuvor genannten zweiten Durchfahrvorgang wird also ein Bahnabschnitt 36 zwischen dem zweiten Startpunkt 13b und dem ersten Startpunkt 13a geleert. Die in diesem Bahnabschnitt 36 vorhandenen Stopfen 5 werden dann auch durch die weiteren, bereits zuvor geleerte Bahnabschnitte 36 auf dem Weg hin zu dem Reservoir 6 geschoben. Dieser Vorgang wird bevorzugt anschließend auch noch für alle weiteren vorgesehenen Startpunkte (hier beispielhaft für den dritten Startpunkt 13c und den vierten Startpunkt 13d) wiederholt. Besonders bevorzugt werden beim Auftreten einer Störung alle Durchfahrvorgänge ausgehend von allen vorgesehenen Startpunkten 13a, 13b, 13c, 13d immer durchgeführt, unabhängig davon, ob im jeweiligen Bahnabschnitt 36 Stopfen 5 vorhanden sind oder nicht. So kann sichergestellt werden, dass Störungen bzw. Fehler beim Transport der Stopfen 5 sicher behoben werden, auch wenn durch die mindestens eine Sensoreinheit 10 keine ganz exakte Bestandsaufnahme/Analyse des vorliegenden Fehlers durchgeführt wurde, sondern wenn bspw. ein Bahnsensor 16 der Sensoreinheit 10 lediglich erkennt, dass in einer Transportbahn 4 keine Stopfen 5 mehr an den der Aufnahmeposition 8 ankommen.

In bevorzugten Ausführungsvarianten ist die Vorrichtung 1 und insbesondere die Fehlerbereinigungseinrichtung 9 darüber hinaus auch dazu eingerichtet, ihren eigenen Betrieb zu überwachen. Beispielsweise kann an dem Roboterarm 23 ein als Kraftsensor oder Wegsensor ausgeführter Sensor 37 vorgesehen sein, mit dem bspw. erkannt werden kann, welche Kraft notwendig ist, um eine Transportbahn 4 mit dem Schieberelement 11 zu durchfahren und/oder ob ein Vorschub des Schieberelements 11 bei dem Durchfahrvorgang wie geplant und vorgesehen auftritt. Gegebenenfalls können auch Mittel vorgesehen sein, um den Roboterantrieb 24 zu überwachen und anhand von Betriebsgrößen des Roboterantriebs 24 zu erkennen, welche Kräfte und/oder Vorschubbewegungen des Roboterarms 23 bzw. des Schieberelements 11 auftreten. Messgrößen betreffend den Betrieb des Roboterarms 23 von Sensoren 37 oder aus dem Roboterantrieb 24 werden bevorzugt an das Steuergerät 12 übermittelt und in dem Steuergerät 12 verarbeitet, um Betriebsgrößen für den Betrieb des Roboterarms 23 zu ermitteln. Insgesamt können so Widerstände beim Durchfahrvorgang erkannt werden. Bevorzugt kann die Vorrichtung 1 bzw. die Fehlerbereinigungseinrichtung 9 dann so eingerichtet sein, dass der Betrieb der Fehlerbereinigungseinrichtung 9 modifiziert wird, wenn erkannt wird, dass beim Betrieb der Fehlerbereinigungseinrichtung 9 bestimmte Grenzwerte erreicht und/oder überschritten werden. Wenn bspw. mit einem Sensor 37 ein Widerstand beim Durchfahren der Transportbahn 4 erkannt wird, kann der Durchfahrvorgang abgebrochen werden. Gegebenenfalls kann dann an einem anderen Startpunkt 13a, 13b, 13c, 13d ein weiterer Durchfahrvorgang gestartet werden. Mit Bezug auf die in Fig. 3 beispielhaft gezeigten Startpunkte 13a, 13b, 13c und 13d kann bspw. vorgesehen sein, dass regulär zunächst nur zwei Durchfahrvorgänge zum Beseitigen einer erkannten Störung durchgeführt werden, wobei ein erster Durchfahrvorgang beim Startpunkt 13b startet, während ein zweiter Durchfahrvorgang beim Startpunkt 13d startet. Wenn es nicht möglich ist, die komplette Transportbahn 4 mit diesen beiden Durchfahrvorgängen von Stopfen 5 freizuräumen, weil sich bspw. Stopfen 5 beim Zurückschieben durch die Transportbahn 4 weiter verkeilen, dann können gegebenenfalls weitere Durchfahrvorgänge ausgehend von dem Startpunkte 13a und/oder ausgehend von dem Startpunkt 13c gestartet werden. Wenn bspw. verkeilte Stopfen 5 innerhalb der Transportbahn 4 vorliegen, kann durch einen solchen weiteren Durchfahrvorgang ggf. eine Verkeilung aufgelöst werden. Ggf. können beliebig viele Startpunkte vorgesehen sein, um Bahnabschnitte 36 der Transportbahn 4 zu unterteilen und so sicherzustellen, dass das Freiräumen der Transportbahn 4 und das Beseitigen der Störung auf jeden Fall gelingt. Gegebenenfalls kann die Fehlerbereinigungseinrichtung 9 auch für eine freie Wahl geeigneter Startpunkte des Durchfahrvorgangs entlang der Transportbahn 4 eingerichtet sein.

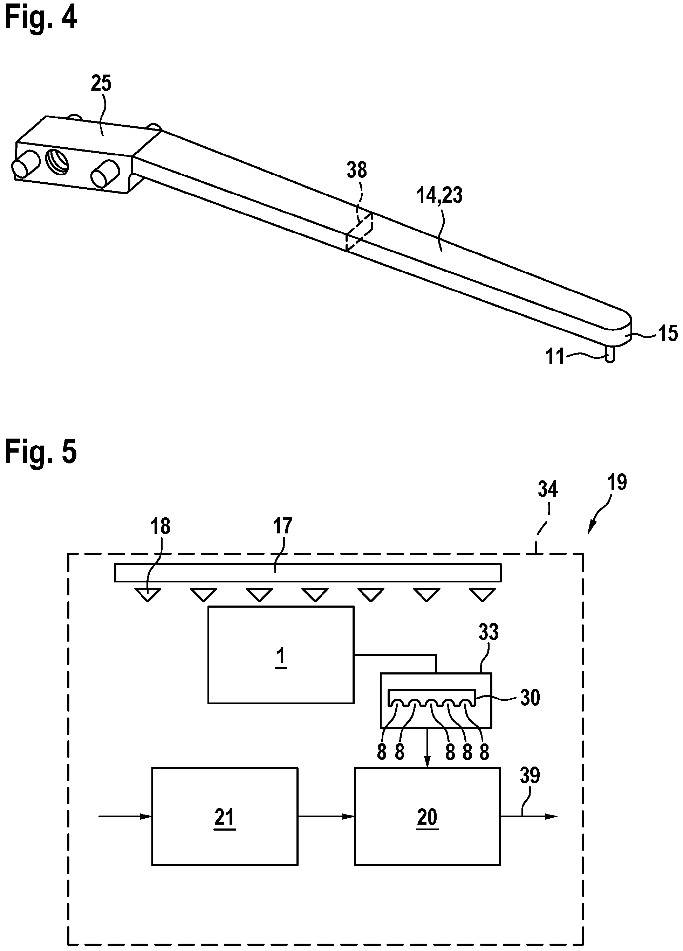

Die Fig. 4 zeigt ein Detail eines Roboterarms 23 einer beschriebenen Vorrichtung. Der Ausleger 14 des Roboterarms 23 ist bevorzugt schmal gestaltet und läuft hin zu dem Ende 15 mit dem Schieberelement 11 zu. Gegenüberliegend zu dem Ende 15 hat der Ausleger 14 eine Anschlussgeometrie 25, mit welcher der Ausleger 14 an weitere Komponenten des Roboterarms 23 uns insbesondere an einen Roboterantrieb 24 angeschlossen ist. Eine Querschnittsform 38 des Auslegers 14 ist bevorzugt so gestaltet, dass eine von oben auf das Führungsbauteil 3 treffende Reinluftströmung möglichst wenig beeinflusst wird.

Die Fig. 5 zeigt eine Anlage 19 zur Befüllung von Behältnissen 2 mit einer Flüssigkeit - insbesondere zur Befüllung von Behältnissen 2 mit einem flüssigen Arzneimittel. Die Behältnisse 2 werden bevorzugt entlang eines Förderwegs 39 durch die Anlage 19 befördert. Entlang des Förderwegs 39 kommt zunächst eine Abfüllstation 21, an welcher die Behältnisse 2 befüllt werden. Anschließend gelangen die Behältnisse 2 in eine Verschlussstation 20. Die Verschlussstation 20 wird von einem Stopfenübergabesystem 33 mit Stopfen zum Verschließen der Behältnisse 2 versorgt. Das Stopfenübergabesystem 33 kann auch die in Fig. 3 gezeigte Gabel 30 mit den Aufnahmepositionen 8 für Stopfen 5 aufweisen. Das Stopfenübergabesystem bzw. die Aufnahmepositionen 8 der Gabel 30 werden mit einer beschriebenen Vorrichtung 1 mit Stopfen 5 befüllt bzw. bestückt.

Die Anlage 19 umfasst bevorzugt einen Reinraum 34, in welchem die Befüllung und das Verschließen der Behältnisse 2 unter Reinraumbedingungen stattfinden. Bevorzugt hat die Anlage 19 eine Reinluftbereitstellung 17, mit welcher insbesondere die Vorrichtung 1 aber auch andere Komponenten wie die Abfüllstation 21 und/oder die Verschlussstation 20 permanent mit einer (laminaren) Reinluftströmung 18 von oben beaufschlagt werden können.

### Bezugszeichenliste

- 1: Vorrichtung
- 2: Behältnisse
- 3: Führungsbauteil
- 4: Transportbahn
- 5: Stopfen
- 6: Reservoir
- 7: Förderrichtung
- 8: Aufnahmeposition
- 9: Fehlerbehebungseinrichtung
- 10: Sensoreinheit
- 11: Schieberelement
- 12: Steuergerät
- 13a: erster Startpunkt
- 13b: zweiter Startpunkt
- 13c: dritter Startpunkt
- 13d: vierter Startpunkt
- 14: Ausleger
- 15: Ende
- 16: Bahnsensor
- 17: Reinluftbereitstellung
- 18: Reinluftströmung
- 19: Anlage
- 20: Verschlussstation
- 21: Abfüllstation
- 22: Stopfenstau
- 23: Roboterarm
- 24: Roboterantrieb
- 25: Anschlussgeometrie
- 26: Zuführrohr
- 27: Bunker
- 28: Vorsortierung
- 29: Sortierung
- 30: Gabel
- 31: Überlauf
- 32: Rückführförderung
- 33: Stopfenübergabesystem
- 34: Reinraum
- 35: Abstand
- 36: Bahnabschnitt
- 37: Sensor
- 38: Querschnittsform
- 39: Förderweg

## Patentansprüche

1. Vorrichtung (1) zur Bereitstellung von Stopfen (5) zum Verschließen von Behältnissen (2) aufweisend ein Führungsbauteil (3) und/oder eine Sortierung (28,29) mit mindestens einer Transportbahn (4), über die Stopfen transportiert werden können, und weiter aufweisend ein Fehlerbehebungseinrichtung (9) mit mindestens einer Sensoreinheit (10) zum Erkennen einer Störung beim Transport der Stopfen (5) in der mindestens einen Transportbahn (4), mit mindestens einem Schieberelement (11), und mit einem Steuergerät (12), wobei das Steuergerät (12) dazu eingerichtet ist, bei einer mit der Sensoreinheit (10) erkannten Störung in einer der Transportbahnen (4) das Schieberelement (11) so zu betätigen, dass mit dem Schieberelement (11) die jeweilige Transportbahn (4) durchfahren wird, um mindestens einen Stopfen aus der Transportbahn (4) zu schieben und so die Störung zu beseitigen.

2. Vorrichtung (1) nach Anspruch 1, wobei das Schieberelement (11) am Ende (15) eines Roboterarms (23) angeordnet ist und wobei das Steuergerät (12) dazu eingerichtet ist, den Roboterarm (23) zu steuern, um das Schieberelement (11) zu bewegen.

3. Vorrichtung nach Anspruch 2, wobei der Roboterarm (23) einen Ausleger (14) aufweist, an dessen Ende (15) das Schieberelement (11) angeordnet ist, und wobei die Vorrichtung (1) so ausgeführt ist, dass von dem Roboterarm (23) ausschließlich der Ausleger (15) und das Schieberelement (11) oberhalb des Führungsbauteils (3) und/oder oberhalb der Sortierung (28,29) angeordnet sind.

4. Vorrichtung (1) nach einem der vorhergehenden Ansprüche, wobei in dem Steuergerät (12) mindestens ein Startpunkt (13a, 13b, 13c, 13d) im Verlauf jeder der Transportbahnen (4) definiert ist, wobei das Steuergerät (12) dazu eingerichtet ist bei einer erkannten Störung in einer Transportbahn (4) die jeweilige Transportbahn (4) ausgehend von dem jeweiligen Startpunkt (13a, 13b, 13c, 13d) zu durchfahren.

5. Vorrichtung (1) nach Anspruch 4, wobei in dem Steuergerät (12) mindestens zwei Startpunkte (13) im Verlauf jeder der Transportbahnen (4) definiert sind, wobei das Steuergerät (12) dazu eingerichtet ist bei einer erkannten Störung in einer Transportbahn (4) diese Transportbahn (4) mehrfach zu durchfahren, wobei bei einem ersten Durchfahrvorgang die Transportbahn (4) ausgehend von einem ersten Startpunkt (13a) durchfahren wird, wobei dann anschließend ausgehend von jedem der weiteren Startpunkte (13b, 13c, 13d) aus ein weiterer Durchfahrvorgang stattfindet, wobei die Startpunkte (13a,13b,13c,13d) derart nacheinander angefahren werden, dass die jeweils durchfahrene Strecke der Transportbahn (4) jedes Mal länger wird.

6. Vorrichtung (1) nach einem der vorhergehenden Ansprüche, wobei das Steuergerät (12) dazu eingerichtet ist, einen Widerstand zu erkennen, welcher beim Durchfahren der mindestens einen Transportbahn (4) mit dem Schieberelement (11) auftritt.

7. Vorrichtung (1) nach einem der vorhergehenden Ansprüche, wobei das Steuergerät (12) dazu eingerichtet ist eine Vorwärtsbewegung des Schieberelementes (11) beim Durchfahren der mindestens einen Transportbahn (4) mit dem Schieberelement (11) zu überwachen und festzustellen, ob die Vorwärtsbewegung einer erwarteten Bewegung entspricht.

8. Vorrichtung (1) nach einem der vorhergehenden Ansprüche, wobei das Steuergerät (12) dazu eingerichtet ist, dann wenn eine Vorwärtsbewegung und/oder ein Widerstand beim Durchfahren der mindestens einen Transportbahn (4) mit dem Schieberelement (11) einen Grenzwert überschreitet und/oder unterschreitet, einen Durchfahrvorgang abzubrechen und an einen anderen Startpunkt (13a,13b,13c,13d) im Verlauf der jeweiligen Transportbahn (4) einen weiteren Durchfahrvorgang zu starten.

9. Vorrichtung (1) nach Anspruch 8, wobei das Steuergerät (12) weiter dazu eingerichtet ist, dann wenn der weitere Durchfahrvorgang erfolgreich abgeschlossen ist, erneut den vorangegangenen Durchfahrvorgang zu starten.

10. Vorrichtung (1) nach einem der vorhergehenden Ansprüche, wobei die mindestens eine Sensoreinheit (10) mindestens einen Bahnsensor (16) umfasst, mit welchem der Transport von Stopfen durch eine Transportbahn (4) erkannt werden kann.

11. Vorrichtung (1) nach Anspruch 10, wobei die mindestens eine Sensoreinheit insbesondere dazu eingerichtet ist zu erkennen, wenn kein Transport von Stopfen durch eine Transportbahn (4) erfolgt.

12. Vorrichtung (1) nach einem der vorhergehenden Ansprüche aufweisend eine Reinluftbereitstellung (17), welche dazu eingerichtet ist, von einer Position oberhalb des Führungsbauteils (3) ausgehend eine insbesondere gleichmäßige von oben nach unten ausgerichtete insbesondere laminare Reinluftströmung (18) zu erzeugen, mit welcher das Führungsbauteil (3) beaufschlagt wird.

13. Anlage (19) zum Befüllen von Behältnissen (2) mit einer Flüssigkeit, insbesondere mit einer pharmazeutischen Flüssigkeit, aufweisend eine Verschlussstation (20), an welcher befüllte Behältnisse (2) mit Stopfen (5) verschlossen werden und weiter aufweisend eine Vorrichtung (1) gemäß einem der vorhergehenden Ansprüche zur Bereitstellung von Stopfen (5) für die Verschlussstation (20).

14. Verfahren zum Beseitigen von Störungen beim Transport von Stopfen (5) in mindestens einer Transportbahn (4) in einer Vorrichtung (1) zur Bereitstellung der Stopfen (5), wobei die Stopfen (5) über die Transportbahn (4) in einer Förderrichtung transportiert werden können, aufweisend die folgenden Schritte:
a) Erkennen einer Störung beim Transport der Stopfen (5) in der Transportbahn (4);
b) Einführen eines Schieberelementes (11) in die mindestens eine Transportbahn (4); und
c) Durchfahren der mindestens einen Transportbahn (4) entgegen der Förderrichtung mit dem Schieberelement (11), um mindestens einen Stopfen (5) aus der Transportbahn (4) zurück in ein Reservoir zu fördern, in welchem die Stopfen (5) bereitgestellt werden.
